# DEMANDE DE BREVET EUROPEEN

(11) **EP 4 525 367 A1**
(43) Date de publication de la demande: **19.03.2025**
(21) Numéro de dépôt: 24178977.5
(22) Date de dépôt: 30.05.2024
(51) Int. Cl.: H04L 9/40, G06F 21/32, G06F 21/64, G06Q 50/26, G06Q 50/40, G07C 9/25, G07C 9/37, H04L 9/32, H04L 67/12, G06F 21/60, H04L 9/08

(54) **PROCÉDÉS ET ENTITÉS POUR SÉCURISER LA GESTION DE DONNÉES DE TRAJETS**

(30) Priorité: 18.09.2023 FR 2309854
(71) Demandeur: IDEMIA Public Security France, 92400 Courbevoie (FR)
(72) Inventeur: MARTRENCHAR, Paul, 92400 Courbevoie (FR); HAKIM, Amaanie, 92400 Courbevoie (FR); FONDEUR, Jean-Christophe, 92400 Courbevoie (FR); CHABANNE, Hervé, 92400 Courbevoie (FR)
(74) Mandataire: IPS

(57) **Abrégé**

L'invention vise un mécanisme pour sécuriser la gestion de données de trajets dans lequel les une entité (EGD) de gestion de données de trajets vérifie (EG4) avant de traiter (EG6) une commande, que la requête (RQ) de traitement a été validée (ES6) par une entité de contrôle (CTR).

## Description

### Domaine Technique

L'invention se situe dans le contexte général de la gestion de données de transport, et en particulier des gabarits biométriques permettant le contrôle des passagers.

Dans la suite de ce document, on pourra utiliser de façon équivalente les expressions « données de transport » ou « données de trajet ». Ces données de transport ou de trajet peuvent notamment comporte notamment un identifiant du trajet (par exemple un numéro de vol, un identifiant de train, un identifiant de traversée maritime) et des données relatives aux passagers de ce trajet, par exemple des données biométriques.

Parfois, pour simplifier la description, on se placera dans le contexte spécifique de trajets en avion et de données de vol mais la présente divulgation s'applique de façon similaire aux autres trajets et aux autres moyens de transport.

Il est connu qu'au moment des contrôles de sécurité aéroportuaires, tel que l'embarquement pour un trajet, on demande aux passagers, afin de contrôler leur accès à la salle d'embarquement au moyen de transport, , de regarder une caméra ou de poser un doigt sur un capteur d'empreinte digitale par exemple, afin de recalculer leurs gabarits biométriques et de les comparer avec les gabarits biométriques de référence des passagers enregistrés pour ce trajet.

L'invention vise en particulier à protéger ces gabarits biométriques de référence, et plus généralement des données de trajet, contre une utilisation malveillante.

### Exposé de l'invention

A cet effet, et selon un premier aspect, la présente invention concerne un procédé de sécurisation mis en oeuvre par une entité de contrôle pour sécuriser des traitements effectuées par une entité de gestion de données de trajets, ledit procédé comportant les étapes suivantes :
- réception d'une requête comportant des paramètres d'une commande destinée à être exécutée par ladite entité de gestion, les paramètres comportant au moins un identifiant d'un trajet et un code de ladite commande;
- vérification des paramètres de la commande ;
et si les paramètres sont tous valides :
- génération, en utilisant une clé de signature privée de ladite entité de contrôle, d'une signature cryptographique calculée à partir d'au moins un desdits paramètres ;
- envoi, à ladite entité de gestion, de ladite requête et de ladite signature cryptographique.

Corrélativement, l'invention concerne une entité de contrôle configurée pour sécuriser les traitements effectuées par une entité de gestion de données de trajets, ladite entité de contrôle comportant :
- un module de communication configuré pour recevoir une requête comportant des paramètres d'une commande destinée à être traitée par ladite entité de gestion, les paramètres comportant au moins un identifiant d'un trajet et un code de ladite commande ;
- un module cryptographique configuré pour générer, en utilisant une clé de signature privée de ladite entité de contrôle, une signature cryptographique calculée à partir d'au moins un desdits paramètres ; et
- un module de communication configuré pour envoyer, à ladite entité de gestion, ladite requête et ladite signature cryptographique.

Selon un deuxième aspect, la présente invention concerne un procédé, mis en oeuvre par une entité de gestion de données de trajets, ce procédé comportant les étapes suivantes :
- réception, en provenance d'une entité de contrôle :
   (i) d'une requête comportant des paramètres d'une commande destinée à être traitée par ladite entité de gestion, les paramètres comportant au moins un identifiant d'un trajet et un code de ladite commande ; et
   (ii) une signature cryptographique d'au moins un desdits paramètres générée en mettant en oeuvre le procédé de sécurisation selon l'invention;
- vérification de la validité de ladite signature en utilisant une clé publique de vérification de signature de ladite entité de contrôle ;
- traitement de ladite commande, uniquement si la validité de ladite signature est vérifiée.

Corrélativement, l'invention concerne une entité de gestion de données de trajets comportant :
- un module de communication configuré pour recevoir, en provenance d'une entité de contrôle :
   (i) une requête comportant des paramètres d'une commande destinée à être traitée par ladite entité de gestion, les paramètres comportant au moins un identifiant d'un trajet et un code de ladite commande ; et
   (ii) une signature cryptographique d'au moins un desdits paramètres ;
- un module cryptographique configuré pour vérifier la validité de ladite signature en utilisant une clé publique de vérification de signature de ladite entité de contrôle ;
- un module de traitement configuré pour traiter ladite commande, uniquement si la validité de ladite signature est vérifiée.

L'invention concerne également un système comportant une entité de contrôle et une entité de gestion de données de trajets telles que mentionnées ci-dessus.

L'invention s'applique notamment à des trajets en avion (vols), à des trajets en train, ou à des trajets en bateau (traversée). Ainsi, et d'une façon générale, la présente invention propose de conditionner le traitement des commandes par l'entité de gestion des données de transport à la vérification d'une signature de paramètres de cette commande, ladite signature étant calculée par une entité tierce, à savoir par l'entité de contrôle. L'entité de contrôle est donc une unité distincte de l'entité de gestion. Dans un mode particulier de réalisation, l'entité de contrôle et l'entité de gestion de données de transport sont opérées par des opérateurs distincts.

L'invention permet ainsi de garantir que l'accès et le traitement des données de trajets, notamment aux gabarits biométriques de référence ne se fait que dans un contexte autorisé, puisque toute requête reçue par l'entité de gestion des données de trajets qui n'est pas accompagnée d'une signature valide n'est pas traitée.

Dans un mode particulier de réalisation de l'invention, l'entité de gestion des données de trajets a fait l'objet d'une certification par un tiers.

Plus précisément, cette entité de gestion est certifiée pour garantir :
(i) qu'elle ne traite ladite commande que si la requête est selon un type prédéterminé ; et
(ii) le traitement de ladite commande par ledit module de traitement.

Ce mode de réalisation permet de disposer d'une entité de gestion des données de trajets sécurisée, notamment sans porte dérobée.

Cela permet avantageusement que l'entité de contrôle reçoive la requête d'une application métier mise en oeuvre par une entité non certifiée, par exemple opérée par la compagnie opérant le trajet (compagnie aérienne, compagnie de chemin de fer, compagnie maritime), ces applications métiers pouvant ainsi être légères et aisément mises à jour, notamment sur des supports variés tels que des bornes d'enregistrement ou des dispositifs mobiles tels que des téléphones portables.

Par exemple, la requête reçue par l'entité de contrôle peut comporter une commande pour :
- déclarer le trajet (par exemple le vol), ou
- supprimer le trajet, ou
- enregistrer un gabarit biométrique de référence d'un passager chiffré avec une clé de chiffrement connue de ladite entité de gestion, ou
- authentifier un passager au moyen d'un gabarit biométrique calculé avec des données biométriques de ce passager acquises au moment de son passage en point de contrôle de sécurité aéroportuaire.

Le système de l'invention offre alors un mécanisme parfaitement sécurisé puisque :
- la certification de l'entité de gestion de données de trajets interdit tout traitement par cette entité de gestion hors contexte de réception d'une requête dans un format déterminé faisant notamment l'objet de la certification ;
   - la coopération entre l'entité de contrôle et l'entité de gestion de données de trajets garantit que seules les requêtes dont des paramètres sont signés par l'entité de contrôle avec la clé privée de l'entité de contrôle seront traitées par l'entité de gestion.

En ce sens, il peut être considéré que l'invention permet de valider et auditer les requêtes traitées par l'entité de gestion des données de trajets.

D'autres conditions que la vérification de la validité de la signature peuvent être requises pour traiter la commande, mais en tout état de cause, conformément à l'invention, la commande n'est pas traitée par l'entité de gestion de données de trajets si celle-ci détermine que la signature des paramètres de la requête n'est pas valide ou si elle détermine que la requête n'est pas accompagnée de ladite signature.

Dans un mode particulier de réalisation, l'entité de contrôle envoie la requête et la signature à l'entité de gestion des données de trajets dans un même message. En variante, elles peuvent être envoyées dans des messages distincts.

Le procédé de sécurisation comporte une étape de vérification des paramètres de la commande par ladite entité de contrôle.

Par exemple, l'entité de contrôle vérifie que le format de la requête correspond à des formats autorisés, par exemple pour lesquels l'entité de gestion de données de trajet a été certifiée. Par exemple, l'entité de contrôle vérifie que le format du gabarit biométrique est conforme au type de format attendu (taille, emplacement dans la requête par exemple).

Par exemple, l'entité de contrôle peut vérifier l'appartenance du code de commande compris dans la requête à une liste de codes préformatée, ainsi si un code inconnu de cette liste est utilisé le code ne peut pas être validé.

Par exemple, l'entité de contrôle peut vérifier l'existence d'un trajet associé à l'identifiant de trajet compris dans la requête.

Si l'entité de contrôle détecte un ou plusieurs paramètres non valides dans la requête, elle peut simplement rejeter la requête et ne pas procéder aux étapes de signature et d'envoi à l'entité de gestion. Elle peut en outre émettre une alerte.

Dans un mode particulier de réalisation, les paramètres de la commande comportent un identifiant d'un émetteur de la requête.

Ce mode de réalisation peut permettre, par exemple à l'entité de contrôle, de contrôler si l'émetteur est un émetteur autorisé.

Par exemple les émetteurs autorisés sont ceux dont l'identifiant est enregistré dans une liste blanche ou ceux dont l'identifiant n'est pas enregistré dans une liste noire.

Dans un autre mode de réalisation, les émetteurs autorisés ceux dont l'identifiant vérifient un format particulier.

Dans un mode particulier de réalisation, lesdits paramètres comportent un gabarit biométrique d'un passager, ledit gabarit ayant été chiffré par une application d'une entité tiers émettrice de la requête avec une clé de chiffrement connue de l'entité de gestion de données de trajets.

Dans un mode particulier de réalisation, le procédé de sécurisation comporte une étape d'enregistrement, dans un registre, d'au moins une transaction représentative de la réception de ladite requête et/ou de l'envoi, à ladite entité de gestion, de la requête et de la signature cryptographique.

Préférentiellement, l'entité de contrôle enregistre dans ce registre une transaction pour chaque requête reçue et une transaction pour chaque envoi de la requête et de la signature à l'entité de gestion.

Une transaction comporte par exemple, pour une requête reçue : un identifiant de l'émetteur de la requête, la date et l'heure de réception de la requête, la requête elle-même, et une indication selon laquelle les paramètres reçus sont valides ou non.

Pour chaque envoi d'une requête et de la signature à une entité de gestion, la transaction comporte par exemple: un identifiant de l'entité de gestion, la date et l'heure de l'envoi, la requête et signature.

Ce mode de réalisation permet à des tiers de tracer toutes les actions de l'unité de gestion. Il permet également d'effectuer un suivi statistique permettant de détecter une anomalie, ainsi avantageusement que son origine, telle qu'un surnombre anormal de requêtes d'enregistrements pour un même trajet par exemple via un même terminal d'enregistrement, et d'émettre ainsi une alerte dédiée.

Dans un mode de réalisation de l'invention dans lequel les identifiants des émetteurs des requêtes sont enregistrés dans le registre, une analyse de ce registre, par exemple statistique, permet de détecter un émetteur non autorisé ou un nombre de requête anormalement élevé issue d'un émetteur en particulier. Lors d'une telle détection, une alarme peut être remontée.

Dans un mode de réalisation, le registre est un registre public, par exemple une chaîne de blocs, la traçabilité étant ainsi rendue possible par des tiers au système selon l'invention.

Dans un mode particulier de réalisation, si la signature est déterminée comme non valide, la requête est simplement ignorée. En variante une alerte de sécurité peut être remontée.

Jusqu'alors il a été indiqué comment l'invention permettait de garantir que l'entité de gestion des données de trajets ne traitait les requêtes que si elle était sollicitée dans un contexte particulier.

Dans une variante particulièrement avantageuse de réalisation, l'invention offre une sécurité supplémentaire en s'assurant que les gabarits biométriques des passagers sont stockés, déchiffrés et comparés dans un environnement de confiance.

Ainsi, dans un mode de réalisation du procédé de gestion de données de trajets, l'entité de gestion de données de trajets comporte une pluralité d'élément sécurisés et la commande comprise dans ladite requête est une commande pour enregistrer un passager pour le trajet, un paramètre de la commande étant un gabarit biométrique de référence dudit passager chiffré avec une clé de chiffrement connue de de l'entité de gestion de données de trajets.

Par exemple, la clé de chiffrement connue de l'entité de gestion de données de trajets peut être une clé publique ou une clé de session échangée encryptée par une clé privée ou calculée via le protocole Diffie-Hellman basé sur les courbes elliptiques ECDH (de l'anglais Elliptic curve Diffie-Hellman).

Dans ce mode de réalisation, le procédé comporte :
- déchiffrer, dans un dit élément sécurisé, le gabarit biométrique de référence chiffré du passager avec une clé de déchiffrement privée associée à la clé de chiffrement connue de de l'entité de gestion de données de trajets; et
- enregistrer ledit gabarit biométrique de référence dans un dit élément sécurisé. Par exemple ledit gabarit biométrique peut être enregistré chiffré ou déchiffré.

De même, dans un mode de réalisation, la commande comprise dans la requête est une commande pour authentifier un passager embarquant pour le trajet, un paramètre de la commande étant un gabarit biométrique dudit passager calculé à partir de données biométriques acquises au moment de son passage au point de contrôle de sécurité aéroportuaire et chiffré avec la clé de chiffrement connue de l'entité de gestion de données de trajets. Dans ce mode de réalisation, le procédé de gestion de données de trajets comporte :
- déchiffrer ce gabarit biométrique avec la clé de déchiffrement privée ; et
- demander aux éléments sécurisés de comparer ce gabarit biométrique déchiffré avec les gabarits biométriques de référence enregistrés dans ces éléments sécurisés.

Dans cette première variante de mise en oeuvre de l'invention, les éléments sécurisés, par exemple regroupés par grappe de 64, peuvent être configurés pour effectuer des traitements cryptographiques et des traitements biométriques en parallèle.

Avantageusement, les gabarits biométriques en clair restent confinés dans ces éléments sécurisés, ceux-ci pouvant être certifiés.

Dans une autre variante de l'invention, le traitement des profils biométriques est mis en oeuvre par un module matériel de sécurité (en anglais HSM pour Hardware Security Module) connectable à un dispositif hôte.

De façon connue, ces modules HSM qui se présentent par exemple sous forme de cartes électroniques cryptographiques embarquées avec une interface de connexion de type PCI, PCI-express ou USB, comprennent des moyens de traitement cryptographiques sécurisés, typiquement des crypto-processeurs.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 représente schématiquement un système conforme à un mode particulier de réalisation de l'invention;
[Fig. 2] La figure 2 illustre un exemple de requête pouvant être utilisé dans un mode particulier de réalisation de l'invention ;
[Fig. 3] La figure 3 représente un exemple d'entité de gestion de données de trajets pouvant être utilisé dans un mode particulier de réalisation de l'invention ;
[Fig. 4] La figure 4 représente sous forme d'organigramme les principales étapes d'un procédé de sécurisation conforme à l'invention et les principales étapes d'un procédé de traitement conforme à l'invention.
[Fig. 5] La figure 5 représente l'architecture matérielle d'une entité de contrôle conforme à un mode particulier de réalisation de l'invention ;
[Fig. 6] La figure 6 représente l'architecture fonctionnelle d'une entité de contrôle conforme à un mode particulier de réalisation de l'invention;
[Fig. 7] La figure 7 représente l'architecture matérielle d'une entité de gestion de données de trajets conforme à un mode particulier de réalisation de l'invention ;
[Fig. 8] La figure 8 représente l'architecture fonctionnelle d'une entité de gestion de données de trajets conforme à un mode particulier de réalisation de l'invention.

### Description des modes de réalisation

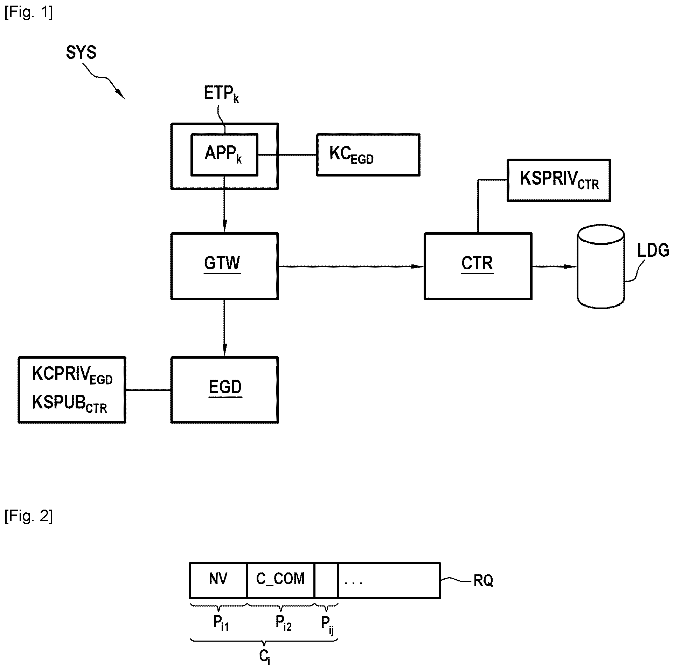

La figure 1 représente un système SYS conforme à l'invention, dans un mode particulier de réalisation. Il comporte dans cet exemple des entités tiers ETPₖ mettant chacune en oeuvre une ou plusieurs applications APPₖ, une passerelle GTW, une entité de contrôle CTR conforme à l'invention, et une entité EGD de gestion de données de trajets conforme à l'invention.

Les applications APPₖ sont configurées pour envoyer des requêtes RQ destinées à être traitées par l'entité EGD de gestion de données de trajets.

De telles requêtes sont représentées à la figure 2. Elles comportent notamment et plus précisément les paramètres Pᵢⱼ d'une commande Cᵢ destinée à être exécutée par l'entité EGD de gestion de données de trajets, ces paramètres Pᵢⱼ comportant au moins un identifiant de trajet, par exemple un numéro de vol NV, et un code C_COM de la dite commande Cᵢ.

Les paramètres Pᵢⱼ peuvent également comporter l'identifiant d'un émetteur de la requête.

A titre d'exemples, les commandes C₁ à C₄ suivantes peuvent être envisagées :
C₁ : déclaration d'un trajet (par exemple d'un vol) NV : code commande C_COM = « DECL » ; paramètres Pᵢⱼ = {NV},
C₂ : suppression d'un trajet NV : code commande C_COM = « DEL », paramètres Pᵢⱼ = {NV} ;
Ca : enregistrement du gabarit biométrique de référence d'un passager PSG pour un trajet
NV : code commande C_COM = « REG » ; paramètres Pᵢⱼ = {NV, CRYP(GAB^{R}_{PSG}, KC_{EGD})},
C₄ : authentification d'un passager PSG au moment de son passage au point de contrôle de sécurité aéroportuaire pour le trajet NV, par comparaison du gabarit biométrique GAB^{B}_{PSG} calculé pour ce passager PSG avec des données biométriques acquises au moment de son passage au point de contrôle de sécurité aéroportuaire avec les gabarits biométriques de référence des passagers enregistrés pour ce trajet : code commande C_COM = « BRD » ; paramètres Pᵢⱼ = {NV, CRYP(GAB^{B}_{PSG}, KC_{EGD})}.

Pour les deux commandes C₃ et C₄, CRYP(GAB^{R}_{PSG}, KC_{EGD}) et CRYP(GAB^{B}_{PSG}, KC_{EGD}) désignent respectivement :
- le gabarit biométrique de référence GAB^{R}_{PSG} du passager PSG calculé par exemple avec des données biométriques acquises au moment de l'enrôlement du passager, par exemple en utilisant la photographie de son passeport, et
- le gabarit biométrique GAB^{B}_{PSG} de ce passager PSG recalculé avec des données biométriques acquises au moment de son passage au point de contrôle de sécurité aéroportuaire, chiffrées avec une clé de chiffrement KC_{EGD} connue de l'entité de gestion de données de vols EGD.

Les deux commandes C₁ et C₂ de déclaration d'un trajet et de suppression d'un trajet sont par exemple émises par une application APPₖ du système d'information d'une compagnie de transport opérant le trajet.

La troisième commande C₃ d'enregistrement est par exemple émise 24 heures avant le trajet, par une application APPₖ du système d'information de la compagnie de transport opérant le trajet, pour enregistrer les gabarits biométriques de référence GAB^{R}_{PSG} de tous les passagers PSG attendus pour le trajet.

La quatrième commande C₄ d'authentification est par exemple émise par une application APPₖ embarquée dans un terminal situé par exemple au niveau du point de contrôle de sécurité aéroportuaire, cette application étant configurée pour :
- acquérir des données biométriques (reconnaissance faciale, empreinte digitale) d'un passager PSG au moment de son passage au point de contrôle de sécurité aéroportuaire,
- calculer un gabarit biométrique GAB^{B}_{PSG} de ce passager à partir de ces données biométriques, et
- chiffrer ce gabarit biométrique GAB^{B}_{PSG} avec la clé de chiffrement KC_{EGD} connue de l'entité de gestion de données de trajets EGD.

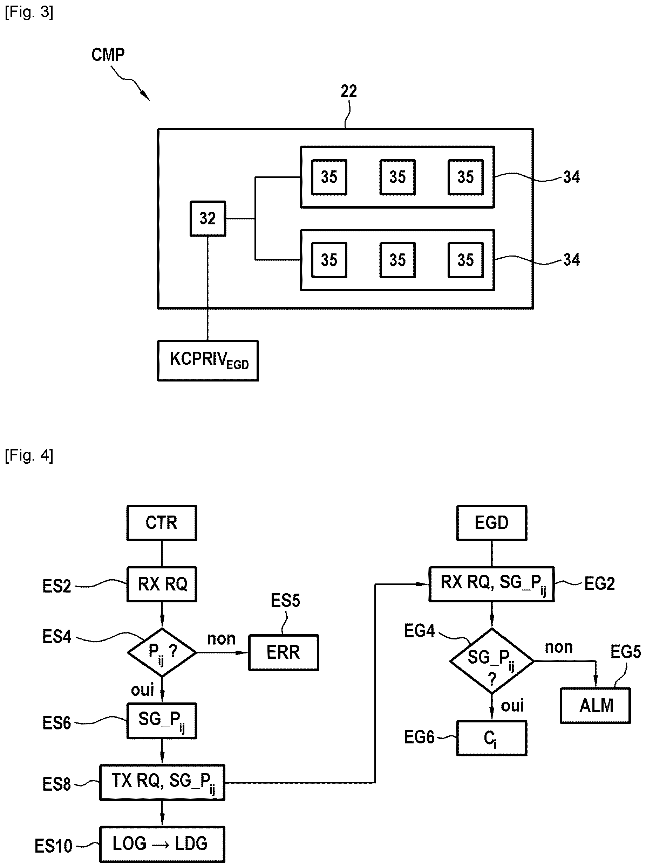

Dans un mode de réalisation de l'invention, l'entité EGD de gestion de données de trajets comporte un composant CMP basé sur un système tel que décrit dans le document FR 3 089 377. Ce composant CMP, représenté schématiquement à la figure 3, comporte notamment, comme le système décrit dans le document FR 3 089 377, un module électronique 22 comportant un contrôleur 32 et une ou plusieurs grappes 34 d'éléments sécurisés 35, les éléments sécurisés 35 étant configurés pour exécuter des tâches cryptographiques élémentaires.

Dans un mode de réalisation de l'invention, le composant CMP de l'entité EGD de gestion de données de trajets se distingue notamment du système décrit dans le document FR 3 089 377 en ce qu'il est en outre configuré pour effectuer des opérations biométriques.

Par exemple, lorsque le contrôleur 32 reçoit une commande C₃ d'enregistrement d'un gabarit biométrique de référence, le contrôleur 32 est configuré pour déchiffrer ce gabarit (reçu chiffré dans la commande C₃) avec une clé de déchiffrement privée KCPRIV_{EGD} associée à la clé de chiffrement KCPUB_{EGD} connue de l'entité de gestion et pour enregistrer le gabarit biométrique de référence en clair GAB^{R}_{PSG} dans un élément sécurisé 35.

De la même façon, lorsque le contrôleur 32 reçoit une commande d'authentification C₄ d'un passager au moment de son passage au point de contrôle de sécurité aéroportuaire, le contrôleur 32 est configuré pour déchiffrer le gabarit biométrique de ce passager calculé sur la base de données biométriques acquises au moment du passage au point de contrôle de sécurité aéroportuaire (reçu chiffré dans la commande C₄) avec la clé de déchiffrement privée KCPRIV_{EGD} et pour demander aux éléments sécurisés 35 de comparer ce gabarit biométrique déchiffré GAB^{B}_{PSG} avec les gabarits biométriques de référence précédemment enregistrés.

De façon très avantageuse, dans ce mode de réalisation, cette comparaison s'effectue au sein des éléments sécurisés 35 de sorte que les gabarits biométriques de référence GAB^{R}_{PSG} (en clair) ne sont pas exposés.

Conformément à l'invention, les requêtes RQ émises par les entités tiers EPₖ et destinées à être traitées par l'entité EGD de gestion de trajets sont signées par l'entité de contrôle CTR en utilisant une clé de signature privée KSPRIV_{CTR} de l'entité de contrôle CTR.

Dans le mode de réalisation décrit ici, la signature SG_Pᵢⱼ est calculée sur l'ensemble de la requête RQ mais en variante la signature peut être calculée uniquement sur la base des paramètres Pᵢⱼ de la commande Cᵢ comprise dans la requête.

Ainsi, l'entité EGD de gestion de données de trajets vérifie la validité de la signature SG_Pᵢⱼ, en utilisant une clé publique de vérification de signature KSPUB_{CTR}, avant de traiter la commande Cᵢ. Plus précisément, l'entité EGD de gestion de données traite la commande Ci si et seulement si la validité de la signature SG_Pᵢⱼ est vérifiée.

La figure 4 représente sous forme d'organigramme les principales étapes ES d'un procédé de sécurisation conforme à un mode particulier de réalisation de l'invention et les principales étapes ES d'un procédé de gestion de données de trajets conformes à un mode particulier de réalisation de l'invention.

Nous supposerons que le procédé de gestion de données de trajets est mis en oeuvre par une entité EGD de gestion de données de trajets.

Nous supposerons que le procédé de sécurisation est mis en oeuvre par une entité de contrôle CTR pour sécuriser des traitements effectués par cette entité EGD de gestion de données de trajets.

Dans le mode de réalisation décrit ici, le procédé de sécurisation comporte une étape ES2 de réception d'une requête RQ, telle que décrite précédemment en référence à la figure 2, émise par une application APPₖ d'une entité tiers ETPₖ.

Cette requête RQ comporte des paramètres Pᵢⱼ d'une commande Cᵢ destinée à être exécutée par l'entité de gestion des données de trajets EGD.

Les paramètres Pᵢⱼ comportant au moins un identifiant de trajet NV et un code C_COM de la commande Cᵢ. Ils peuvent aussi comprendre par exemple un identifiant d'un émetteur de la requête, un gabarit biométrique de référence GAB^{R}_{PSG} d'un passager PSG calculé par exemple avec des données biométriques du passager acquises au moment de l'enrôlement du passager, par exemple en utilisant la photographie de son passeport ou un gabarit biométrique GAB^{B}_{PSG} d'un passager PSG calculé avec des données biométriques du passager acquises par exemple au moment de l'embarquement du passager, ces gabarits ayant été chiffrés par l'application APPₖ avec la clé de chiffrement KC_{EGD} connue de l'entité de gestion de données de trajets EGD.

Dans le mode de réalisation du système SYS de la figure 1, la requête RQ émise par l'application APPₖ est plus précisément transmise à l'entité dé contrôle CTR par la passerelle GTW.

Dans le mode de réalisation décrit ici, le procédé de sécurisation comporte une étape ES4 au cours de laquelle l'entité de contrôle CTR vérifie les paramètres Pᵢⱼ de la commande Cᵢ.

Dans le mode de réalisation décrit ici, si au moins un paramètre Pᵢⱼ de la commande Cᵢ est erroné, l'entité EGD envoie (étape ES5) un message d'erreur à l'application APPₖ.

Dans le mode de réalisation décrit ici, si les paramètres Pᵢⱼ sont tous valides, le procédé de sécurisation comporte une étape ES6 au cours de laquelle l'entité de contrôle CTR génère, en utilisant une clé de signature privée KSPRIV_{CTR} de l'entité de contrôle CTR, une signature cryptographique SG_Pᵢⱼ calculée à partir d'au moins un paramètre Pᵢⱼ (préférentiellement tous) de la commande Cᵢ.

Dans le mode de réalisation décrit ici, l'entité de contrôle CTR envoie la requête RQ et la signature cryptographique SG_Pᵢⱼ à l'entité EGD de gestion de données de trajets au cours d'une étape ES8 du procédé de sécurisation.

Dans le mode de réalisation décrit ici, au cours d'une étape ES10, l'entité de contrôle CTR enregistre, dans un registre LDG du système S:
- (i) une transaction pour chaque requête RQ reçue (correspondant aux occurrences de l'étape ES2). Ces transactions comportent par exemple l'heure de la réception de la requête RQ et un identifiant de l'application APPₖ et/ ou de l'entité tiers ETPₖ émettrice de la requête; et
(ii) - une transaction pour chaque envoi d'une requête RQ et de la signature associée SG_Pᵢⱼ à une entité EGD de gestion de données de trajets (correspondant aux occurrences de l'étape ES8. Ces transactions comportent par exemple l'heure de cet envoi et un identifiant de l'entité EGD de gestion de données de trajets.

Dans le mode de réalisation décrit ici, la requête RQ et la signature SG_Pᵢⱼ envoyées par l'entité de contrôle CTR à l'étape ES8, sont reçues pas l'entité EGD de gestion de données de trajets au cours d'une étape EG2 du procédé de gestion de données de trajets.

Au cours d'une étape EG4 du procédé de gestion de données de trajets, l'entité EGD vérifie la validité de la signature SG_Pij en utilisant une clé publique de vérification de signature KSPUB_{CTR} de l'entité de contrôle CTR.

Si la validité de la signature n'est pas vérifiée, la commande comprise dans la requête RQ n'est pas traitée, et, dans un mode particulier de réalisation, une alarme ALM est générée (étape EG5) et par exemple transmise à un poste de la compagnie aérienne ou d'un agent de l'aéroport.

Si la validité de la signature est vérifiée, la commande comprise dans la requête RQ est traitée (étape EG6),
Par exemple :
- si la commande est une commande C₁ de déclaration d'un trajet NV, l'entité EGD de gestion de données de trajets prépare une structure de données pour enregistrer les gabarits biométriques de référence des passagers du trajet NV ;
- si la commande est une commande C₂ de suppression d'un trajet NV, l'entité EGD de gestion de données de trajets détruit les gabarits biométriques de référence des passagers du trajet NV ;
- si la commande est une commande C₃ d'enregistrement du gabarit biométrique de référence d'un passager PSG pour un trajet NV, ce gabarit reçu chiffré avec une clé de chiffrement KC_{EGD} connue de l'entité de gestion EGD est déchiffré par cette entité EGD avec une clé privée associée KCPRIV_{EGD} et est enregistré ;
- si la commande est une commande C₄ d' authentification d'un passager PSG au moment de son passage au point de contrôle de sécurité aéroportuaire pour le trajet NV, le gabarit biométrique GAB^{B}_{PSG} calculé pour ce passager PSG avec des données biométriques acquises au moment de son passage au point de contrôle de sécurité (à l'embarquement par exemple)et reçu chiffré est déchiffré par l'entité EGD et comparé avec les gabarits biométriques de référence des passagers enregistrés pour ce trajet.

Très avantageusement, et comme déjà décrit, lorsque l'entité EGD de gestion de données de trajets comporte un composant CMP tel que décrit en référence à la figure 3, les déchiffrements des gabarits biométriques et leurs comparaisons sont effectués au sein des éléments sécurisés 35 de sorte qu'ils ne sont pas exposés.

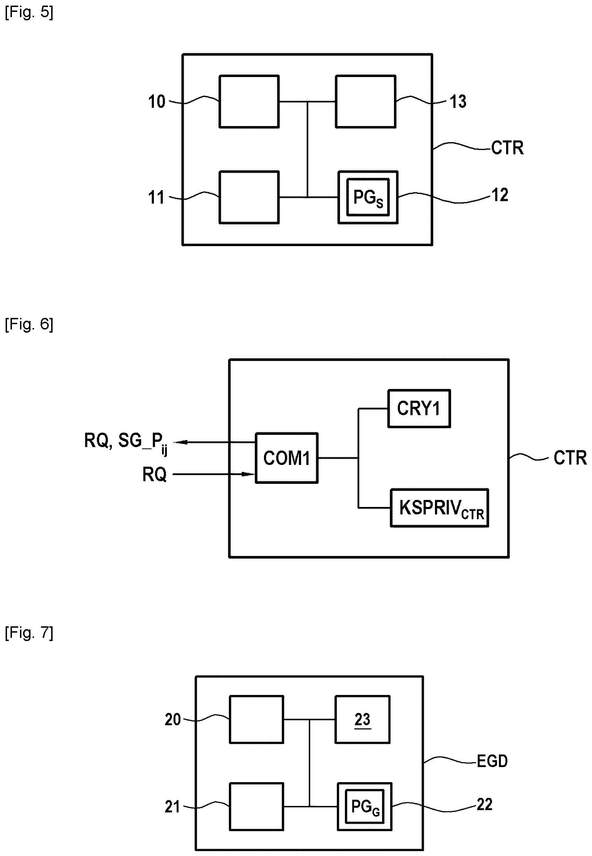

La figure 5 représente l'architecture matérielle d'une entité de contrôle CTR conforme à l'invention. Dans le mode de réalisation décrit ici, l'entité de contrôle CTR a l'architecture matérielle d'un ordinateur. Elle comporte notamment un processeur 10, une mémoire vive 11, une mémoire morte 12 et des moyens de communication 13.

La mémoire morte 12 constitue un support d'enregistrement au sens de l'invention. Elle comporte un programme d'ordinateur PGs conforme à l'invention.

Ce programme d'ordinateur PGs comporte des instructions pour exécuter les étapes du procédé de sécurisation décrit en référence à la figure 4 lorsque ledit programme est exécuté par un ordinateur, et notamment des étapes pour :
- recevoir une requête comportant des paramètres d'une commande destinée à être exécutée par ladite entité de gestion, les paramètres comportant au moins un identifiant dudit trajet et un code de ladite commande ;
- générer, en utilisant une clé de signature privée de ladite entité de contrôle, d'une signature cryptographique calculée à partir d'au moins un desdits paramètres ;
- envoyer, à ladite entité de gestion, ladite requête et ladite signature cryptographique.

Ce programme d'ordinateur PGs définit ici des modules fonctionnels de l'entité de contrôle CTR, et qui comprennent notamment, comme illustré à la figure 6 :
- un premier module de communication configuré pour recevoir une requête RQ comportant des paramètres Pᵢⱼ d'une commande Cᵢ destinée à être traitée par l'entité EGD de gestion de données de trajets, les paramètres comportant au moins un identifiant du trajet et un code de la commande ;
- un module cryptographique CRY1 configuré pour générer, en utilisant une clé de signature privée de ladite entité de contrôle CTR, une signature cryptographique SG_Pᵢⱼ calculée à partir d'au moins un desdits paramètres ; et
- un deuxième module de communication COM configuré pour envoyer, à ladite entité de gestion de données de trajets EGD, ladite requête RQ et ladite signature cryptographique SG_Pᵢⱼ.

Dans le mode de réalisation de la figure 6, les deux modules de communication sont un même module référencé COM1.

La figure 7 représente l'architecture matérielle d'une entité de gestion de données de trajets EGD conforme à l'invention. Dans le mode de réalisation décrit ici, l'entité de gestion de données de trajets a l'architecture matérielle d'un ordinateur. Elle comporte notamment un processeur 20, une mémoire vive 21, une mémoire morte 22 et des moyens de communication 23.

La mémoire morte 22 constitue un support d'enregistrement au sens de l'invention. Elle comporte un programme d'ordinateur PG_{G} conforme à l'invention.

Ce programme d'ordinateur PG_{G} comporte des instructions pour exécuter les étapes du procédé de gestion de données de trajets décrit en référence à la figure 4 lorsque ledit programme est exécuté par un ordinateur, et notamment des étapes pour :
- recevoir, en provenance d'une entité de contrôle :
   (i) une requête RQ comportant des paramètres d'une commande destinée à être traitée par ladite entité de gestion, les paramètres comportant au moins un identifiant dudit trajet et un code de ladite commande ; et
   (ii) une signature cryptographique SG_Pᵢⱼ d'au moins un desdits paramètres ;
- vérifier la validité de ladite signature SG_Pᵢⱼ en utilisant une clé publique de vérification de signature KSPUB_{CTR} de ladite entité de contrôle ;
- traiter ladite commande, uniquement si la validité de ladite signature est vérifiée.

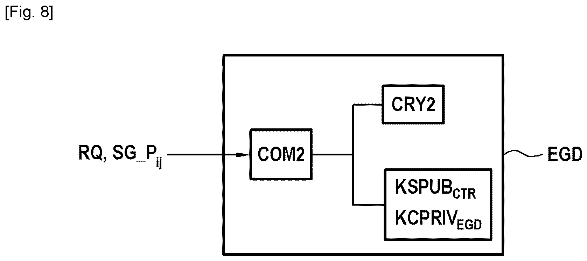

Ce programme d'ordinateur PG_{G} définit ici des modules fonctionnels de l'entité de gestion de données de trajets EGD, et qui comprennent notamment, comme illustré à la figure 8 :
- un module de communication COM2 configuré pour recevoir, en provenance d'une entité de contrôle :
   (i) une requête RQ comportant des paramètres d'une commande destinée à être traitée par ladite entité de gestion, les paramètres comportant au moins un identifiant dudit trajet et un code de ladite commande ; et
   (ii) une signature cryptographique SG_Pᵢⱼ d'au moins un desdits paramètres ;
- un module cryptographique CRY2 configuré pour vérifier la validité de ladite signature en utilisant une clé publique de vérification de signature KSPUB_{CTR} de ladite entité de contrôle ;
- un module de traitement MT configuré pour traiter ladite commande, uniquement si la validité de ladite signature est vérifiée.

Le composant CMP d'entité de gestion de données de trajets décrit précédemment en référence à la figure 3 constitue un exemple avantageux de module cryptographique CRY2.

## Revendications

1. Procédé de sécurisation mis en oeuvre par une entité de contrôle (CTR) pour sécuriser des traitements effectués par une entité (EGD) de gestion de données de trajets, ledit procédé comportant les étapes suivantes :
- réception (ES2) d'une requête (RQ) comportant des paramètres (Pᵢⱼ) d'une commande (Cᵢ) destinée à être exécutée par ladite entité de gestion (EGD), les paramètres (Pᵢⱼ) comportant au moins un identifiant d'un trajet (NV) et un code (C_COM) de ladite commande (Cᵢ);
- vérification (ES4) des paramètres de la commande ;
et si les paramètres (Pij) sont tous valides :
- génération (ES6), en utilisant une clé de signature privée (KSPRIV_{CTR}) de ladite entité de contrôle (CTR), d'une signature cryptographique (SG_Pᵢⱼ) calculée à partir d'au moins un desdits paramètres (Pᵢⱼ) ;
- envoi (ES8), à ladite entité de gestion (EGD), de ladite requête (RQ) et de ladite signature cryptographique (SG_Pᵢⱼ).

2. Procédé de sécurisation selon la revendication 1, **caractérisé en ce que** lesdits paramètres (Pᵢⱼ) comportent un identifiant d'un émetteur de ladite requête (RQ) .

3. Procédé de sécurisation selon la revendication 1ou 2, **caractérisé en ce que** lesdits paramètres (Pᵢⱼ) comportent un gabarit biométrique (GAB_{RPSG}, GAB_{BPSG}) d'un passager, ledit gabarit ayant été chiffré par une application (APPk) d'une entité tiers (ETPₖ) émettrice de la requête (RQ) avec une clé de chiffrement (KC_{EGD}) connue de l'entité de gestion de données de trajets (EGD).

4. Procédé de sécurisation selon l'une quelconque des revendications 1 à 3, **caractérisé en ce qu'**il comporte une étape (ES10) d'enregistrement, dans un registre (LDG), d'au moins une transaction représentative de la réception de ladite requête et/ou de l'envoi, à ladite entité de gestion, de la requête et de la signature cryptographique.

5. Procédé de sécurisation selon l'une quelconque des revendications 1 à 4, **caractérisé en ce que** ladite requête (RQ) reçue par ladite entité de contrôle (CTR) comporte une commande pour :
- déclarer le trajet, ou
- supprimer le trajet, ou
- enregistrer un gabarit biométrique de référence (GAB^{R}_{PSG}) d'un passager chiffré avec une clé de chiffrement (KC_{EGD}) connue de ladite entité de gestion (EGD), ou
- authentifier un passager (PSG) au moyen d'un gabarit biométrique (GABBPSG) calculé avec des données biométriques de ce passager acquises au moment de son passage en point de contrôle de sécurité aéroportuaire.

6. Procédé de gestion de données de trajets, mis en oeuvre par une entité (EGD) de gestion de données de trajets, ce procédé comportant les étapes suivantes :
- réception (EG2), en provenance d'une entité de contrôle (CTR) :
(i) d'une requête (RQ) comportant des paramètres (Pᵢⱼ) d'une commande (Cᵢ) destinée à être traitée par ladite entité de gestion (EGD), les paramètres comportant au moins un identifiant d'un trajet (NV) et un code (C_COM) de ladite commande ; et
(ii) une signature cryptographique (SG_Pᵢⱼ) d'au moins un desdits paramètres (Pᵢⱼ) générée en mettant en oeuvre le procédé de sécurisation selon l'une quelconque des revendications 1 à 5 ;
- vérification (EG4) de la validité de ladite signature (SG_Pᵢⱼ) en utilisant une clé publique de vérification de signature (KSPUB_{CTR}) de ladite entité de contrôle (CTR) ;
- traitement (EG6) de ladite commande, uniquement si la validité de ladite signature est vérifiée.

7. Procédé de gestion de données de trajets selon la revendication 6 dans lequel ladite entité de gestion de données de trajets (EGD) comporte une pluralité d'élément sécurisés (35), la commande comprise dans ladite requête étant une commande pour enregistrer un passager (PSG) pour le trajet (NV), un dit paramètre (Pᵢ) de ladite commande étant un gabarit biométrique de référence (GAB_{PSG}) dudit passager chiffré avec une clé de chiffrement (KC_{EGD}) connue de l'entité de gestion de données de trajets (EGD), ledit procédé comportant :
- déchiffrer, dans un dit élément sécurisé (35), le gabarit biométrique de référence chiffré du passager avec une clé de déchiffrement privée (KCPRIV_{EGD}) associée à ladite clé de chiffrement (KC_{EGD}) connue de l'entité de gestion de données de trajets (EGD); et
- enregistrer ledit gabarit biométrique de référence dans un dit élément sécurisé (35).

8. Procédé de gestion de données de trajets selon la revendication 6, la commande comprise dans ladite requête étant une commande pour authentifier un passager (PSG) embarquant pour le trajet (NV), un dit paramètre (Pi) de ladite commande étant un gabarit biométrique (GAB_{PSG}) dudit passager calculé à partir de données biométriques acquises au moment de son passage en point de contrôle de sécurité et chiffré avec ladite clé de chiffrement (KC_{EGD}) connue de l'entité de gestion de données de trajets (EGD), ledit procédé comportant :
- déchiffrer ce gabarit biométrique avec ladite clé de déchiffrement privée (KCPRIV_{EGD}) ; et
- demander auxdits éléments sécurisés (35) de comparer ce gabarit biométrique déchiffré avec les gabarits biométriques de référence enregistrés dans ces éléments sécurisés.

9. Système (SYS) comprenant :
- une entité de contrôle (CTR) comportant :
- un premier module de communication configuré pour recevoir une requête (RQ) comportant des paramètres (Pᵢⱼ ) d'une commande (Cᵢ) destinée à être traitée par une entité (EGD) de gestion de données de trajets, les paramètres comportant au moins un identifiant du trajet et un code de la commande ;
- un module cryptographique (CRY1) configuré pour générer, une fois tous les paramètres de la commande vérifiés et validés, en utilisant une clé de signature privée de ladite entité de contrôle (CTR), une signature cryptographique (SG_Pᵢⱼ ) calculée à partir d'au moins un desdits paramètres ; et
- un deuxième module de communication (COM) configuré pour envoyer, à ladite entité de gestion de données de trajets (EGD), ladite requête RQ et ladite signature cryptographique (SG_Pᵢⱼ) ;
et
- une entité (EGD) de gestion de données de trajets comportant :
- un module de communication (COM2) configuré pour recevoir, en provenance d'une entité de contrôle (CTR) :
(i) une requête (RQ) comportant des paramètres (Pᵢⱼ) d'une commande (Cᵢ) destinée à être traitée par ladite entité de gestion (EGD), les paramètres comportant au moins un identifiant d'un trajet (NV) et un code (C_COM) de ladite commande ; et
(ii) une signature cryptographique (SG_Pᵢⱼ) d'au moins un desdits paramètres (Pᵢⱼ) ;
- un module cryptographique (CRY2) configuré pour vérifier la validité de ladite signature (SG_Pᵢ) en utilisant une clé publique de vérification de signature (KSPUB_{CTR}) de ladite entité de contrôle (CTR) ;
- un module de traitement (MT) configuré pour traiter ladite commande, uniquement si la validité de ladite signature est vérifiée.

10. Système (SYS) selon la revendication 9, **caractérisé en ce que** l'entité (EGD) de gestion de données de trajets est certifiée pour garantir :
(i) qu'elle ne traite ladite commande que si ladite requête est selon un type prédéterminé
(ii) le traitement de ladite commande par ledit module de traitement.
